# EUROPÄISCHE PATENTANMELDUNG

(11) **EP 1 431 253 A2**
(43) Veröffentlichungstag der Anmeldung: **23.06.2004**
(21) Anmeldenummer: 03026865.0
(22) Anmeldetag: 24.11.2003
(51) Int. Cl.: C02F 3/10

(54) **Kläreinrichtung zur biologischen Reinigung von Wasser**

(30) Priorität: 20.12.2002 DE 10259916
(71) Anmelder: Ballies, Uwe, Dr. med., 24194 Kiel (DE)
(72) Erfinder: Ballies, Uwe, Dr. med., 24194 Kiel (DE)
(74) Vertreter: Gosch, Wolf-Dietrich

(57) **Zusammenfassung**

Kläreinrichtung zur biologischen Reinigung von Wasser mit einem das zu klärende Wasser aufnehmenden Behälter, in dem von aeroben Mikroorganismen besiedelte Filterelemente vorgesehen sind und der mit einer Druckluftquelle verbunden ist, wobei der Behälter 2 nahe seiner Unterseite 5 und benachbart zu seinem Wasserzu- und ablauf 6 Gitter, Siebe oder Netze 7, 8 aufweist, an denen die Filterelemente 3 im Innenraum 9 des Behälters 2 gehaltert sind.

Die Siebe, Gitter oder Netze 7, 8 sind jeweils im Abstand zur Unterseite 5 und zum Wasserzu- und ablauf 6 angeordnet. Der Wasserzu- und ablauf 6 ist im Bereich eines Endes des Behälters angeordnet und endet nahe seiner Unterseite 5.

## Beschreibung

Die Erfindung betrifft eine Kläreinrichtung zur biologischen Reinigung von Wasser mit einem das zu klärende Wasser aufnehmenden Behälter, in dem von aeroben Mikroorganismen besiedelte Filterelemente vorgesehen sind und der mit einer Druckluftquelle verbunden ist.

Eine derartige Kläreinrichtung ist beispielsweise in der DE 40 05 975 C2 dargestellt. Bei der dort beschriebenen Ausführungsform wird der Wassereinlass und der Wasserauslass jeweils über Ventile gesteuert, wobei das Ablassen des Wassers mit Hilfe von Druckluft herbeigeführt wird. In der dort gezeigten Anlage ist die biologische Reinigung von Wasser in zwei gleichzeitig verlaufenden Schritten dargestellt, nämlich zum einen die Reinigung durch aeroben Mikroorganismen und die Reinigung durch anaerobe Mikroorganismen.

Dabei hat sich jedoch gezeigt, dass die Reinigung durch anerobe Mikroorganismen sehr viel länger dauert als diejenige durch die aeroben Mikroben, was den Nachteil hat, dass entweder die anerobe Reinigung unvollständig bleiben muss, oder aber der aerobe Reinigungsprozess unnötig lange herausgezögert wird. Dabei ist von Bedeutung, dass die bei der aeroben Reinigung anfallenden Stoffwechselprodukte und sonstige Verunreinigungen des Wassers in dem Behälter nach unten absinken und nur schwer dort weggefördert werden können.

Aufgabe der vorliegenden Erfindung ist es daher, eine Kläreinrichtung der eingangs genannten Art zu schaffen, bei der lediglich die aerobe Reinigungsstufe durchgeführt wird und die anfallenden Stoffwechselprodukte und überschüssige Bakterienmasse nach erfolgter Reinigung des Wassers vollständig aus dem Behälter entfernt werden.

Diese Aufgabe wird erfindungsgemäß dadurch gelöst, dass der Behälter nahe seiner Unterseite und benachbart zu seinem Wasserzu- und ablauf Gitter, Siebe oder Netze aufweist, an denen die Filterelemente im Innenraum des Behälters gehaltert sind. Sie wird ferner dadurch gelöst, dass die Unterseite des Behälters in Richtung auf den Wasserzu- und ablauf nach unten abgeschrägt verläuft.

Hierdurch kann zum einen sichergestellt werden, dass die Filterelemente im Innenraum des Behälters systematisch und intensiv mit der für die Sauerstoffversorgung der Mikroorganismen erforderlichen Luft versorgt werden und die nicht gasförmigen Stoffwechsel-Abbauprodukte der Mikroorganismen sich im unteren Bereich des Behälters sammeln, und dann bei der Entleerung des gereinigten Wassers aus dem Behälter vollständig mit in das Becken, aus dem das zu reinigende Wasser entnommen worden ist und das gereinigte Wasser zurückgeführt wird, am Boden absetzen und durch geeignete Maßnahmen entfernt werden können.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Einen Querschnitt durch einen Behälter einer Kläreinrichtung;
- Figur 2:: einen Längsschnitt durch einen Behälter mit einem Wasserzu- und ablauf, der nahe seiner Unterseite mündet und
- Figur 3:: einen Längsschnitt durch einen Behälter mit einem Fall- und Steigrohr, was im Bereich der Unterseite mündet.

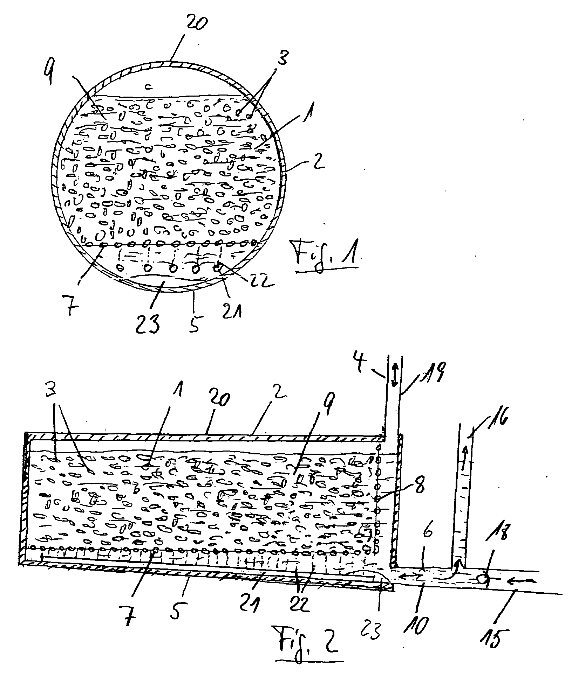

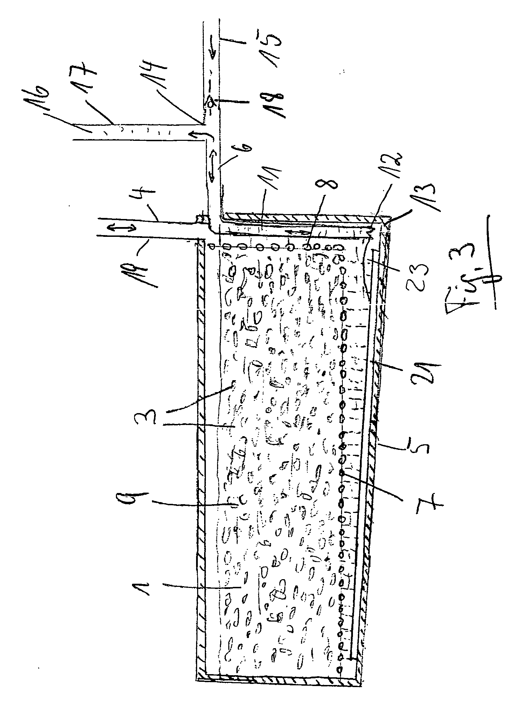

Eine Kläreinrichtung besteht im wesentlichen aus einem das zu klärende Wasser 1 aufnehmenden Behälter 2, in dem Filterelemente 3 vorgesehen sind und der mit einer Druckluftleitung 4 verbunden ist und der nahe seiner Unterseite 5 unter benachbart zu seinem Wasserzu- und ablauf 6 Gitter, Siebe oder Netze 7, 8 aufweist, an denen die Filterelemente 3 im Innenraum 9 des Behälters 2 gehaltert sind. Dabei sind die Gitter, Siebe oder Netze 7, 8 jeweils im Abstand zur Unterseite 5 und zum Wasserzu- und ablauf 6 angeordnet. Die Unterseite 5 des Behälters 2 ist in Richtung auf den Wasserzu- und ablauf 6 nach unten abgeschrägt ausgebildet. Der Wasserzu- und ablauf 6 kann als Rohrleitung 10 ausgebildet sein, die direkt benachbart zur Unterseite 5 des Behälters 2 mündet. Er kann jedoch auch als Fall- und Steigrohr 11 ausgebildet sein, dessen unteres Ende 12 nahe der tiefsten Stelle 13 des Behälters 2 an seiner Unterseite 5 mündet.

Der Wasserzu- und ablauf 6 ist in der Weise aufgetrennt, dass auf der dem Behälter 2 abgewandten Seite der Abzweigung 14 eine das zu klärende Wasser 1 zuführende Wasserzuleitung 15 und eine das geklärte 16 ableitende Wasserableitung 17 ausgebildet sind. Dabei ist die Wasserzuleitung 15 mit einem einen Rückfluss aus dem Behälter 2 verhindernden Rückschlagventil 18 versehen.

Die Druckluftquelle 4 besteht aus einer mit einer (nicht dargestellten) Luftpumpe verbundenen Druckluftleitung 19, die in einen oberen Bereich 20 des Behälters 2 mündet.

Der Behälter 2 ist vorzugsweise nahe seiner Unterseite 5 mit Luftleitungen 21 versehen, die mit Luftaustrittsdüsen 22 versehen und meiner (nicht dargestellten) Luftpumpe verbunden sind. Dabei kann es sich um die selben Luftpumpe handeln, die auch die Druckluftleitung 19 versorgt. Dabei können sowohl die Druckluftleitung 19 und die Luftleitungen 21 gleichzeitig oder alternierend mit Druckluft versorgt werden. Die Luftpumpe besteht vorzugsweise aus deinem Seitenstromverdichter, bei dessen Stillstand ein Rückstrom der zuvor geförderten Luft ermöglicht wird.

Die Filterelemente 3 bestehen vorzugsweise jeweils aus einer flachen, mindestens nach einer Seite offenen Schale, die aus einem Kunststoff gefertigt ist, dessen spezifisches Gewicht um ein geringes Maß größer als das des zu reinigenden Wassers 1 ist. Hierdurch wird zum einen die Durchlüftung des zu reinigenden Wassers 1 und die Versorgung der Mikroorganismen mit Sauerstoff gewährleistet und durch die beweglich in Wasser schwebenden Filterelemente 3 kann eine Verunreinigung der Filterelemente 3 zuverlässig vermieden werden.

An Stelle eines Behälters 2 mit schräg verlaufender Unterseite 6 kann auch ein Zylinder oder ein quaderförmiger Behälter verwendet werden, der insgesamt schräg gestellt ist. Dabei wird vorzugsweise die Druckluftquelle 4 so angeordnet, dass sie an der höchsten Stelle des Zylinders oder des quaderförmigen Behälters mündet.

Die Kläreinrichtung zur biologischen Reinigung von Wasser wird wie folgt betrieben:

Wenn die Luftpumpe abgeschaltet oder die Druckluftleitung 19 drucklos ist, strömt aus einem benachbarten, das zu klärende Wasser 1 enthaltende Wasser durch die Wasserzuleitung 15 durch das Rückschlagventil 18 und den Wasserzu- und ablauf 6 in den Innenraum 9 des Behälters 2, bis das Wasser 1 die Filterelemente 3 vollständig bedeckt und die auf den Filterelementen 3 angesiedelten Mikroorganismen unter Verwendung der von den Filterelementen 3 aufgenommenen und teilweise festgehaltenen Luft enthaltenen Sauerstoff ihre Reinigungsleistung erbringen können. Die Sauerstoffversorgung der Mikroorganismen kann durch Einleitung von Druckluft in die Luftleitungen 21 weiter gefördert werden, da infolge der aus dem Luftaustrittsdüsen 22 austretenden Luftblasen die Filterelemente 3 mit einem breiten Strom von Luftblasen zusätzlich versorgt werden. Wenn das zu reinigende Wasser 1 hinreichend lange im Innenraum 9 des Behälters 2 verblieben ist, so das die Mikroorganismen ihre Reinigungsleistung erbracht haben, sammelt sich an der tiefsten Stelle 13 des Behälters 2 eine bestimmte Menge nicht gasförmiger Stoffwechselabbauprodukte 23 der Mikroorganismen an. Durch Einschalten der Luftpumpe über die Druckluftleitung 19 wird das geklärte Wasser 16 einschließlich der Stoffwechselabbauprodukte 23 zunächst über den Wasserzu- und ablauf 6 bis zur Abzweigung 14 aus dem Innenraum 9 des Behälters 2 herausgedrückt und über die Wasserableitung 17 in den Tank, aus dem das Wasser 1 zunächst entnommen worden ist, zurückgeführt. Dabei sinkt das geklärte Wasser 16 soweit ab, dass die Filterelemente 3 vollständig aus dem Wasser 16 herausragen und allseitig von Luft umspült werden. Nach Abschalten der Druckluftquelle 4 wird die Druckluftleitung 19 drucklos und die zuvor geförderte Luft kann durch die Druckluftleitung 19 wieder entweichen. Aufgrund der auf das zu klärende Wasser 1 einwirkende Schwerkraft füllt sich dann der Behälter 2 erneut mit Wasser 1, so dass der zuvor geschilderte Vorgang wiederholt wird.

## Patentansprüche

1. Kläreinrichtung zur biologischen Reinigung von Wasser mit einem das zu klärende Wasser aufnehmenden Behälter, in dem von aeroben Mikroorganismen besiedelte Filterelemente vorgesehen sind und der mit einer Druckluftquelle verbunden ist, **dadurch gekennzeichnet, dass** der Behälter (2) nahe seiner Unterseite (5) und benachbart zu seinem Wasserzu- und ablauf (6) Gitter, Siebe oder Netze (7, 8) aufweist, an denen die Filterelemente (3) im Innenraum (9) des Behälters (2) gehaltert sind.

2. Kläreinrichtung nach Anspruch 1, **dadurch gekennzeichnet, dass** die Siebe, Gitter oder Netze (7, 8) jeweils im Abstand zur Unterseite (5) und zum Wasserzu- und ablauf (6) angeordnet sind.

3. Kläreinrichtung nach Anspruch 1 und 2, **dadurch gekennzeichnet, dass** der Wasserzu- und ablauf (6) im Bereich eines Endes des Behälters (2) angeordnet ist und nahe seiner Unterseite (5) endet.

4. Kläreinrichtung nach Anspruch 1 bis 3, **dadurch gekennzeichnet, dass** der Wasserzu- und ablauf (6) als Rohrleitung (10) ausgebildet ist, die nahe der Unterseite (5) des Behälters (2) mündet.

5. Kläreinrichtung nach Anspruch 1 bis 3, **dadurch gekennzeichnet, dass** der Wasserzu- und ablauf (6) als Fall- und Steigrohr (11) ausgebildet ist.

6. Kläreinrichtung nach Anspruch 1 bis 5, **dadurch gekennzeichnet, dass** die Unterseite (6) des Behälters (2) in Richtung auf den Wasserzu- und Ablauf (6) nach unten abgeschrägt verläuft.

7. Kläreinrichtung nach Anspruch 1 bis 6, **dadurch gekennzeichnet, dass** der Wasserzu- und ablauf (6) über eine Abzweigung (14) in der Weise aufgetrennt ist, dass auf der dem Behälter (2) abgewandten Seite der Abzweigung eine Wasserzuleitung (15) und eine Wasserableitung (17) ausgebildet sind.

8. Kläreinrichtung nach Anspruch 1 bis 7, **dadurch gekennzeichnet, dass** die Wasserzuleitung (15) mit einem einen Rückfluss aus dem Behälter (2) verhindernden Rückschlagventil (18) versehen ist.

9. Kläreinrichtung nach Anspruch 1 bis 8, **dadurch gekennzeichnet, dass** die Druckluftquelle (4) aus einer mit einer Luftpumpe verbundenen Druckluftleitung (19) besteht, die in einen oberen Bereich (20) des Behälters (2) mündet.

10. Kläreinrichtung nach Anspruch 1 bis 9, **dadurch gekennzeichnet, dass** in dem Behälter (2) nahe seiner Unterseite (5) mindestens eine mit Luftaustrittsdüsen (22) versehene Luftleitung (21) angeordnet ist, die mit einer Luftpumpe verbunden ist.

11. Kläreinrichtung nach Anspruch 1 bis 10, **dadurch gekennzeichnet, dass** eine Luftpumpe aus einem Seitenstromverdichter besteht, bei dessen Stillstand ein Rückstrom der zuvor geförderten Luft ermöglicht wird.

12. Kläreinrichtung nach Anspruch 1 bis 11, **dadurch gekennzeichnet, dass** die Filterelemente (3) jeweils aus einer flachen, mindestens nach einer Seite offenen Schale bestehen, die aus einem Kunststoff gefertigt ist, dessen spezifisches Gewicht um ein geringes Maß größer als das des zu reinigenden Wassers (1) ist.
